# EUROPEAN PATENT SPECIFICATION

(11) **EP 4 599 661 B1**
(45) Date of publication and mention of the grant of the patent: **26.08.2026**
(21) Application number: 25156401.9
(22) Date of filing: 06.02.2025
(51) Int. Cl.: A01D 41/06, A01D 41/12, A01D 41/127

(54) **RESIDUE OSCILLATING DEFLECTOR SPEED COUPLED TO GROUND SPEED OF COMBINE**
MIT DER GRUNDGESCHWINDIGKEIT EINES MÄHDRESCHERS GEKOPPELTE RESTOSZILLATIONSDEFLEKTORGESCHWINDIGKEIT
VITESSE DE DÉFLECTEUR OSCILLANT DE RÉSIDU COUPLÉE À LA VITESSE AU SOL D'UNE MOISSONNEUSE-BATTEUSE

(30) Priority: 07.02.2024 US 202418435498
(43) Date of publication of application: 13.08.2025
(73) Proprietor: CNH Industrial America LLC, New Holland, PA 17557 (US)
(72) Inventor: Linde, Cooper, New Holland, 17557 (US); Harmon, Zachary, New Holland, 17557 (US); Isaac, Nathan E., New Holland, 17557 (US)
(74) Representative: CNH Industrial IP Department

(56) References cited:
- EP-A1- 2 266 381
- EP-A1- 4 173 466
- US-A1- 2002 072 400
- US-A1- 2017 142 900
- US-A1- 2020 045 883

## Description

### FIELD OF THE INVENTION

The present invention relates to agricultural machines, in particular, combine harvesters. More specifically, the present invention relates to a crop residue spreader for a combine harvester.

### BACKGROUND OF THE INVENTION

Rotary threshing and separating systems are used in rotary combine harvesters for threshing crops and separate grain from crop residue, also referred to as material other than grain (MOG). Rotary combine harvesters typically include at least one cylindrical rotor rotated within a cage or concave, with the rotor and surrounding concave being oriented so as to extend forwardly to rearwardly within the combine harvester. Hybrid combines typically include at least one rotor for threshing being transversely oriented and at least one rotor for separating being oriented so as to extend forwardly to rearwardly.

During operation of the combine harvester, crop material is fed or directed into a circumferential passage between the rotor and the concave and is carried rearwardly as grain is threshed from the crop material. The flow of crop residue remaining between the rotor and concave after threshing and separating is typically discharged or expelled at a rear or downstream end of the rotor.

After discharge from the separating system, the crop residue is typically directed into a crop residue distribution system located below and rearwardly of the rear end of the rotor. The crop residue distribution system typically includes a rotary beater and/or chopper and/or other apparatus that conveys and/or chops and propels the residue rearwardly towards an area within the rear end of the combine, hereinafter referred to as a distribution chamber. The crop residue provided within the distribution chamber may be (i) discharged therefrom onto a field as a windrow, (ii) directed into a crop residue spreader mounted on or at the rear end of the combine that is operable for spreading the residue over a swath of a field.

Windrowing typically occurs when users desire to retain the crop residue for post-processing, for example baling. In such cases, the residue, which may be chopped or un-chopped, is discharged from the combine, without entering the spreader, to form a windrow directly behind the combine. A windrow door is typically positioned at the rear opening and is pivotable between a closed position, wherein the crop residue is diverted into the spreader, and an open position, wherein the crop residue is directed over the spreader, through the rear opening, onto a windrow chute and onto the field. When the crop residue is to be discharged onto a field to form a windrow, it is typically preferred that the crop residue be distributed onto the windrow chute extending from the rear opening to allow for the formation of a desirable windrow shape.

A crop residue spreader mounted on or at the rear end of the combine is configured to distribute the processed crop materials or residue over a harvested field. Spreader assemblies typically include counter rotating disks or impellers mounted on a frame for receiving all or part of the processed crop material or residue from the distribution chamber and spreading the material in a generally even side to side manner behind the harvester.

The spreader assembly may include a transition hood, also known as a distribution hood or a spreader hood, specially configured for spreading chaff in a uniform manner and positioned at or near the outlet of the impellers. The transition hood may be provided with a stationary or movable (oscillating) deflector to modify the distribution of the crop residue exiting the rotary disks, for example, to deposit crop residue more evenly across the width of the harvester or across the distribution area behind the harvester.

Operators may set residue spreader parameters to achieve a desired spread. A continuously moving oscillating deflector helps to spread the residue out of the back of the combine evenly over the field, without an additional operator input.

As the combine speeds up, the oscillating deflector can leave linear or arced stripes in the field that have heavy areas of residue and then light areas of residue (i.e., striping). Ground speed of the combine has been observed to have a significant effect on the prominence of the stripes in the field.

In view of the foregoing, it would be desirable to provide a spreader assembly capable of being configured to improve distribution of expelled crop residue material more evenly over a field in response to changing operating conditions.

Patent publication document US2020/045883 discloses a spreader system of an agricultural vehicle for spreading crop residue over a field, including a first spreader device including a plurality of first paddles configured to rotate about a first axis to define a first spread path; and a second spreader device including a plurality of second paddles configured to rotate about a second axis to define a second spread path. The second spreader device and the first spreader device are located side-by-side. The spreader system further includes a deflector that includes a first deflector portion for deflecting the first spread path and a second deflector portion for deflecting the second spread path. The spreader further includes a deflector driver connected to the deflector. The deflector driver is configured to move the first deflector portion and the second deflector portion of the deflector in a direction generally parallel to the first axis or the second axis in an oscillating pattern.

Patent publication document EP2266381 discloses a spreader for spreading straw and other harvest residues over ground, comprising a straw chopper having an inlet for unchopped straw and an outlet for chopped straw which is essentially horizontally directed, and down stream of said outlet an oscillating spreading member comprising an elongate straw stream deflector which is pivotally mounted in an outlet facing end thereof and driven in an essentially horizontal plane over ground by a drive Unit between two end positions.

### SUMMARY OF THE INVENTION

According to one aspect of the invention, a combine harvester comprises: a feeder housing for receiving harvested crop; a separating system for threshing the harvested crop to produce grain and residue; a residue spreader comprising one or more impellers for expelling the residue from the combine; a continuously oscillating residue deflector configured to oscillate by rotation about an axis oriented in the fore-aft direction of the harvester, and positioned to deflect residue expelled by the impellers; and a controller configured to: 1) determine a ground speed of the combine harvester; and 2) adjust an oscillating frequency of the residue deflector to achieve a desired residue distribution, based on the ground speed of the combine harvester.

According to another aspect of the invention, the combine harvester further comprises one or more sensors to detect residue expelled by the combine, wherein the controller is further configured to receive a signal from the one or more sensors indicating a detected residue distribution, to determine whether the detected residue distribution has an undesired feature, and, upon determining the detected residue distribution has an undesired feature, to adjust the oscillating frequency of the residue deflector to mitigate the undesired feature of the detected residue distribution.

According to another aspect of the invention, the oscillating frequency of the residue deflector may be varied by an operator of the combine harvester.

According to another aspect of the invention, a hydraulic or electric motor drives the continuously oscillating residue deflector.

According to another aspect of the invention, the undesired residue distribution feature comprises striping of the residue on the ground.

According to another aspect of the invention, the oscillating frequency of the residue deflector is increased in response to an increase in the ground speed of the combine harvester.

According to another aspect of the invention, the oscillating frequency of the residue deflector is increased in response to the controller determining the detected residue distribution comprises striping of the residue on the ground.

According to another aspect of the invention, a method for controlling a combine comprising a feeder housing for receiving harvested crop, separating system for threshing the harvested crop to produce grain and residue, a residue spreader comprising one or more impellers for expelling the residue from the combine, a continuously oscillating residue deflector configured to oscillate by rotation about an axis oriented in the fore-aft direction of the harvester, and positioned to deflect residue expelled by the impellers, and a controller is provided, the method comprising: 1) determining, by the controller, a ground speed of the combine harvester; and 2) adjusting, by the controller, an oscillating frequency of the residue deflector to achieve a desired residue distribution.

According to another aspect of the invention, a method is provided, wherein the combine harvester further comprises one or more sensors to detect residue expelled by the combine, and wherein the method further comprises the controller receiving a signal from the one or more sensors indicating a detected residue distribution, determining whether the detected residue distribution has an undesired feature, and, upon determining the detected residue distribution has an undesired feature, adjusting the oscillating frequency of the residue deflector to mitigate the undesired feature of the detected residue distribution.

According to another aspect of the invention, a method is provided, further comprising varying, by an operator of the combine harvester, the oscillating frequency of the residue deflector.

According to another aspect of the invention, a method is provided, wherein the undesired feature of the detected residue distribution comprises striping of the residue on the ground.

According to another aspect of the invention, a method is provided, comprising increasing the oscillating frequency of the residue deflector in response to an increase in the ground speed of the combine harvester.

According to another aspect of the invention, a method is provided, comprising increasing the oscillating frequency of the residue deflector in response to the controller determining the detected residue distribution comprises striping of the residue on the ground.

### BRIEF DESCRIPTION OF THE DRAWING FIGURES

The above-mentioned and other features and advantages of this invention, and the manner of attaining them, will become more apparent, and the invention will be better understood, by reference to the following description of an embodiment of the invention taken in conjunction with the accompanying drawings, wherein:
FIG. 1 is a side elevation view of a combine harvester, shown schematically;
FIGS. 2 and 3 are isometric views of an embodiment of a crop residue spreader formed according to the present invention;
FIG. 4 is a partially-exploded isometric view of the crop residue spreader of FIG. 3, shown with windrow chute (also known as a swath board);
FIG. 5 is a rear elevation view of an embodiment of a crop residue spreader formed according to the present invention, showing details of the distribution hood and oscillating deflector;
FIG. 6 is a schematic view of a control system;
FIG. 7 is a flowchart of steps for controlling oscillating deflector parameters based on a signal from the one or more sensors indicating a detected residue distribution, according to an embodiment of the invention; and
FIG. 8 is a flowchart of steps for controlling oscillating deflector parameters based on the ground speed of the combine harvester, and optionally also based on one or more of the rotating speed of the one or more impellers, or the throughput of the combine harvester, according to an embodiment of the invention.

### DETAILED DESCRIPTION

Corresponding reference characters indicate corresponding parts throughout the several views.

The exemplifications set out herein illustrate one or more embodiments of the invention, in the described forms, and such exemplification is not to be construed as limiting the scope of the invention in any manner.

Inasmuch as various components and features of harvesters are of well-known design, construction, and operation to those skilled in the art, the details of such components and their operations will not generally be discussed in significant detail unless considered of pertinence to the present invention or desirable for purposes of better understanding.

In the drawings, like numerals refer to like items, certain elements and features may be labeled or marked on a representative basis without each like element or feature necessarily being individually shown, labeled, or marked, and certain elements are labeled and marked in only some, but not all, of the drawing figures.

The terms "grain", "chaff", "straw", and "tailings" are used principally throughout this specification for convenience but it is to be understood that these terms are not intended to be limiting. Thus, "grain" refers to that part of the crop material that is threshed and separated from the part of the crop material to be discarded, which is referred to as chaff and includes straw, and other non-grain crop material.

Also, the terms "forward", "rearward", "left" and "right", when used in connection with the agricultural harvester and/or components thereof, are usually determined with reference to the direction of forward operative travel of the harvester, but again, they should not be construed as limiting.

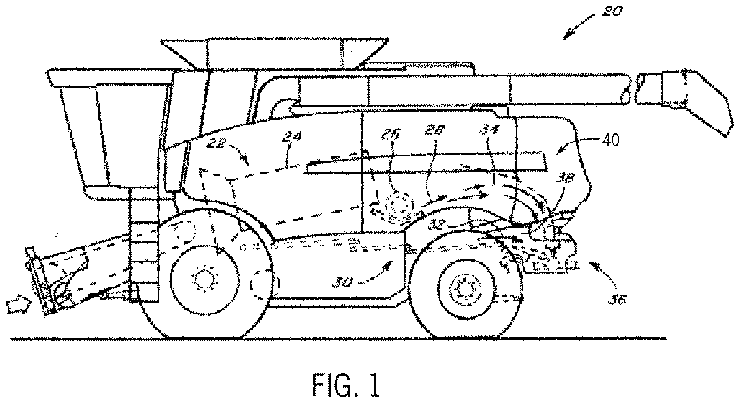

The terms "longitudinal" and "transverse" are determined with reference to the fore- and-aft direction of the agricultural harvester and are equally not to be construed as limiting. The terms "upstream" and "downstream" are determined with reference to the crop flow stream arrows shown in FIG. 1.

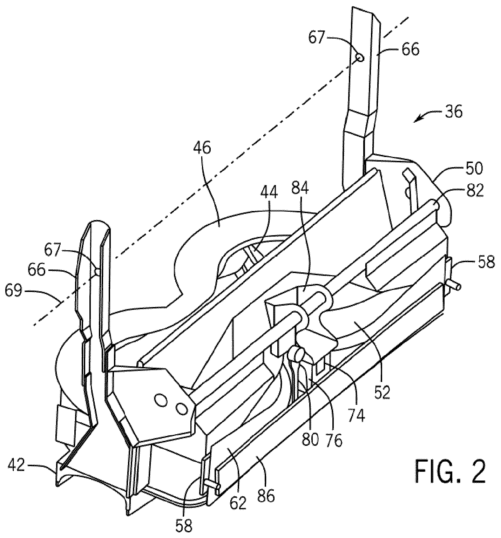

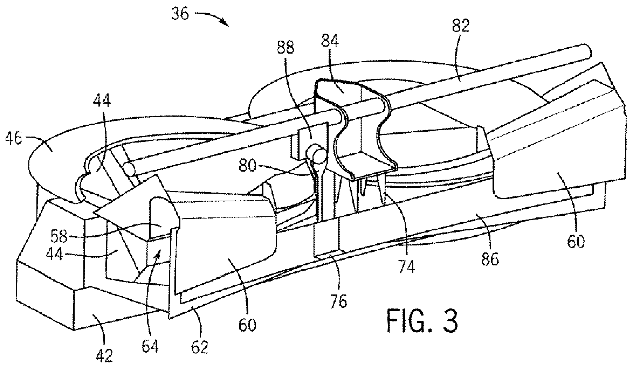

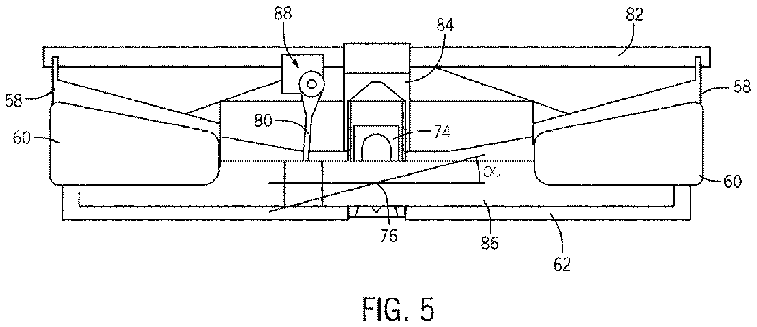

Referring now to the drawings, and more particularly to FIG. 1, there is shown an agricultural combine 20. Combine 20 includes a threshing system 22 having a rotor 24 rotatable for separating straw 28 from the harvested crop, and a beater 26 rotatable for propelling or directing a flow or stream of straw 28 rearwardly along an airborne trajectory through a rear cavity 34 enclosed by a straw hood 40. Combine 20 also includes a cleaning system 30 for receiving the harvested crop from threshing system 22 and removing chaff 32 from the grain and directing a flow or stream of chaff 32 rearwardly through a lower region of rear cavity 34, towards a lower opening 38 in which a crop residue spreader 36, is shown located, constructed and operable according to the present invention. FIGS. 2-5 depict in greater detail the crop residue spreader 36.

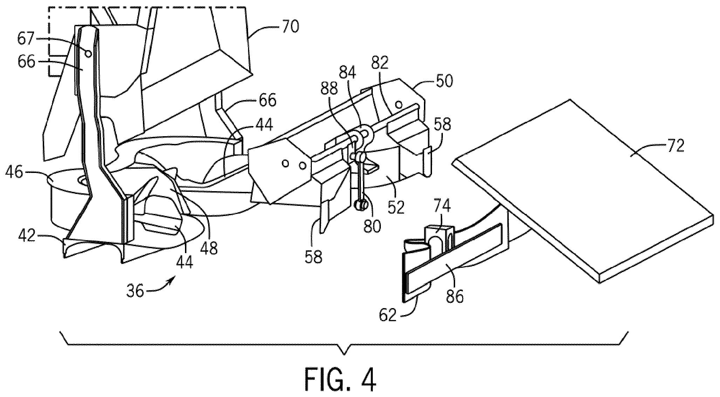

Referring now to FIGS. 2 through 5, there is shown a crop residue spreader 36 for an agricultural harvester 20, including a structural member in the form of a pair of swing arms 66 for mounting the spreader 36 to the straw hood 40. According to a preferred aspect of the invention as shown in FIGS. 2 and 4, spreader 36 is supported for pivotable movement relative to straw hood 40 about an axis 69 defined by pivot points 67 on swing arms 66.

Spreader frame 42 is mounted to swing (or pivot) arms 66, and mounted on spreader frame 42 are a pair of counter-rotating impellers 44. Impellers 44 are configured to receive a crop residue (i.e., straw 28 and/or chaff 32) from, for example, the threshing system 22 and/or cleaning system 30 of the harvester 20 through lower opening 38. Impellers 44 are at least partially surrounded by housing 46, the housing 46 being substantially open in the rearward direction to allow the impellers 44 to discharge the crop residue to the rear of the harvester 20. A center section 48 of the impeller housing 46 extends and tapers rearwardly between the impellers 44, partially separating and dividing the impellers 44. Impellers 44 may also be provided with movable hoods (not shown) to modify the flow of crop residue exiting the impeller housing 46. An example of such a movable impeller housing is described in U.S. 9,370,141. Distribution hood 50 is mounted on swing arms 66 in close proximity to the impellers 44 and impeller housing 46 in a rearward direction facing the discharge of crop residue from the impellers 44.

Distribution hood 50 includes distribution hood divider 52, divider wings 58, and distribution hood frame 82. Suspended from the midpoint of distribution hood frame 82 and at least partially housed within divider 52 is deflector mounting bracket 84, which supports oscillating deflector 62. Aft of divider 52 and divider wings 58, oscillating deflector 62 is mounted to deflector mounting bracket 84 via deflector shaft mount 74. Upper opening 70 is positioned generally above distribution hood 50 at the rear of straw hood 40 to enable discharge from combine 20 of residue flow 28 guided within straw hood 40 around residue spreader 36 and distribution hood 50. Extending rearwardly over distribution hood 50 from upper opening 70 is windrow chute (or swath board) 72. Windrow chute (or swath board) 72 is or may be mounted on spreader frame 42. Rear baffle 60 is suspended from transition hood frame 84 aft of oscillating deflector 62 and deflector frame 86, forming recess 64 between rear baffle 60 and divider wings 58. In operation, deflector 62 oscillates at least partly into and out of recess 64 to alter the trajectory of crop residue ejected from the impeller housing 46 by impellers 44.

Oscillating deflector 62 is mounted on the distribution hood 50. At least partly enclosed within distribution hood divider 52, deflector mounting bracket 84 is suspended from distribution hood frame 82. Deflector shaft mount 74 is bolted to deflector mount bracket 84 and supports deflector shaft 76. Deflector shaft connects to deflector frame 86, and oscillating deflector 62 is mounted on deflector frame 86. Deflector driver 88 is connected to deflector frame 86 by pitman arm 80 and drives movement of deflector shaft 76 in a oscillatory pattern.

The deflector driver 88 may use any type of power, such as electrical, mechanical, or hydraulic power, to move the deflector 62. In one embodiment, deflector driver 88 can be, for example, a motor that is adapted to rotate deflector shaft 76 a predetermined number of degrees from a neutral position and then return deflector shaft 76 to the neutral position. Such motors are commonly employed to drive windshield wipers on various types of vehicles and can be readily adapted to use according to the present invention. By constantly oscillating the movement of the deflector 62 in this fashion, stripes of crop residue being formed on the field can be reduced or avoided by constantly varying the deflection pattern of the crop residue. For example, deflector driver 88 can oscillate the deflector 62 with an oscillation amplitude 2α of about 60° from a neutral position, but it is also contemplated that the oscillation amplitude 2α can be other values between 30° and 120°. A similar effect can also be obtained by linearly moving the deflector 62 from side-to-side with a deflector driver 88 that reciprocates the deflector 62, with many types of drivers (not illustrated) that can create reciprocating movement being known. Each stroke of the reciprocating movement can be adjusted to achieve a desired spread pattern.

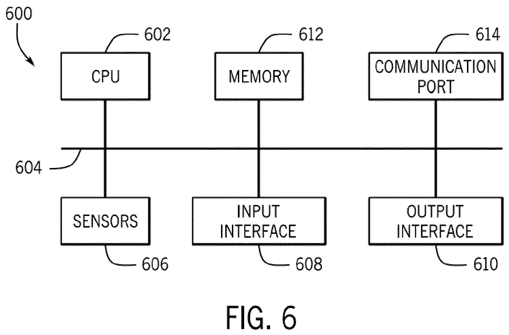

An example of a deflector oscillation frequency control system 600 is shown in FIG. 6. The control system 600 may be implemented using any suitable arrangement of processors and logical circuits. FIG. 6 is a block diagram of exemplary hardware and computing equipment that may be used as a control system 600. The control system 600 includes a central processing unit (CPU) 602, which is responsible for performing calculations and logic operations required to execute one or more computer programs or operations. The CPU 602 is connected via a data transmission bus 604, to sensors 606 (e.g., sensors for detecting deflector driver speed, combine ground speed, impeller rotating speed, combine throughput, and residue distribution), an input interface 608, an output interface 610, and a memory 612. The input and output interfaces 608, 610 may comprise any suitable user-operable and perceivable system, such as a touchscreen controller/display, control knobs or joysticks, and the like. One or more analog to digital conversion circuits may be provided to convert analog data from the sensors 606 to an appropriate digital signal for processing by the CPU 602, as known in the art. The CPU 602 also may be operatively connected to one or more communication ports 614, such as serial communication ports, wireless communication ports (e.g., cellular or Bluetooth communication chipsets), or the like. The CPU 602, data transmission bus 604 and memory 612 may comprise any suitable computing device, such as an INTEL ATOM E3826 1.46GHz Dual Core CPU or the like, being coupled to DDR3L 1066/1333 MHz SO-DIMM Socket SDRAM having a 4GB memory capacity or other memory (e.g., compact disk, digital disk, solid state drive, flash memory, memory card, USB drive, optical disc storage, etc.). The selection of an appropriate processing system and memory is a matter of routine practice and need not be discussed in greater detail herein.

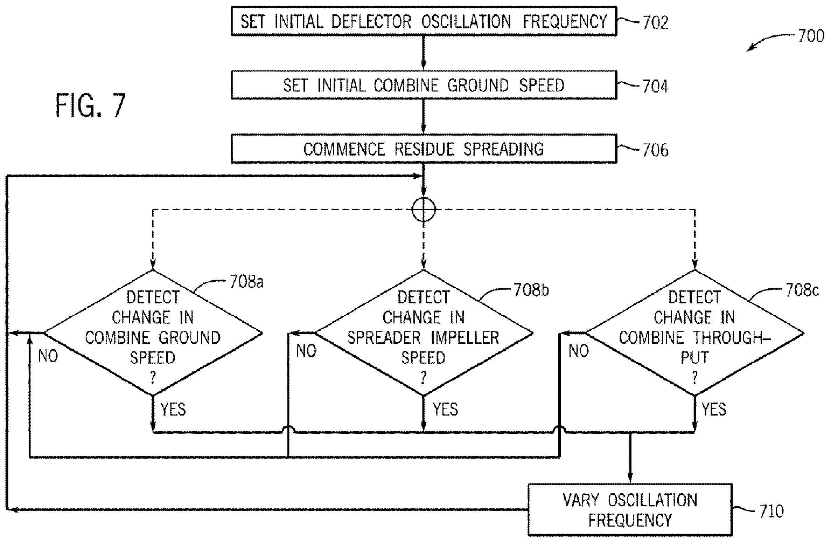

FIG. 7 shows a flowchart of a method 700 for controlling the deflector oscillation frequency, based on the ground speed of the combine harvester, and optionally also based on one or more of a rotating speed of the one or more impellers, and/or a throughput of the combine harvester. In step 702, the controller sets an initial deflector oscillation frequency to a predetermined value or by receiving operator input through the input interface 608. Initially setting the deflector oscillating frequency may be performed in a number of different manners. For example, the initial deflector oscillating frequency may simply be determined from a pre-stored table that is populated based on experiments, operator experience, algorithms, or the like.

In step 704, the controller sets an initial combine ground speed to a predetermined value or by receiving operator input through the input interface 608. In step 706, residue spreading commences. Following commencement of residue spreading in step 706, the controller determines the combine ground speed (708a), and optionally also on one or more of the spreader impeller rotating speed (708b), and/or the combine throughput (708c) by receiving operator input through the input interface 608 (e.g. the operator can enter combine ground speed, spreader impeller rotating speed, and/or combine throughput), or by receiving signals from sensors 606 for measuring these operating parameters. Upon determining that one of these operating parameters has changed, the controller in step 710 correspondingly varies the deflector oscillation frequency to continue residue spreading.

In step 710, the controller varies the deflector oscillation frequency to mitigate undesired residue distribution qualities such as striping of the expelled residue across the ground. In one embodiment, in response to determining in step 708a that the ground speed of the combine has increased from the initial ground speed, or in step 708b that the spreader impeller rotating speed has increased, or in step 708c that the combine throughput has increased, the controller will in step 710 increase the deflector oscillation frequency. In another embodiment, the controller in step 710 will decrease the deflector oscillation frequency in response to a change detected in one or more of the combine ground speed, the spreader impeller rotating speed, or the combine throughput.

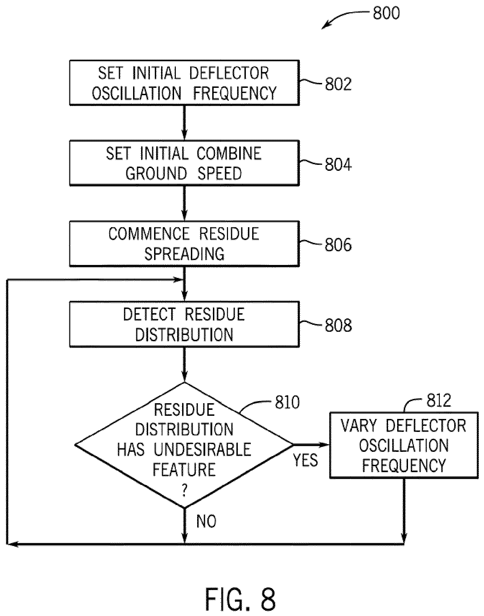

FIG. 8 shows a flowchart of a method 800 for controlling the deflector oscillation frequency, based on a detected residue distribution. In step 802, the controller sets an initial deflector oscillation frequency to a predetermined value or by receiving operator input through the input interface 608. As in the method 700 of FIG. 7, initially setting the deflector oscillating frequency may be performed in a number of different manners. For example, the initial deflector oscillating frequency may simply be determined from a pre-stored table that is populated based on experiments, operator experience, algorithms, or the like.

In step 804, the controller sets an initial combine ground speed to a predetermined value or by receiving operator input through the input interface 608. In step 806, residue spreading commences. Following commencement of residue spreading in step 806, the controller in step 808 receives a signal from the one or more sensors 606 indicating a detected residue distribution. Sensors 606 (e.g., camera, radar) may be mounted to the rear of the combine and captures images and/or data of the residue spread on the ground. The controller 600 then analyzes the images and/or data using known image and/or data processing techniques to determine the desirability of the spread.

If the residue spread is deemed by the controller in step 810 to be desirable, no adjustments to the deflector oscillating frequency are made. However, if the residue spread is deemed by the controller 810 to be undesirable, adjustments to the deflector oscillating frequency are made by the controller in step 812. For example, the deflector oscillating frequency may be increased or decreased until the observable residue spread is desirable (e.g. uniformly spread on the ground). Once these adjustments are made, the controller then uses these adjusted values for controlling the deflector oscillating frequency for further harvesting and residue spreading.

In an embodiment not according to the invention, in addition or as an alternative to varying the deflector oscillating frequency, the stroke or amplitude of the deflector oscillation may be varied according to one or more of the combine ground speed, the spreader impeller rotating speed, the combine throughput, or a detected residue spread distribution.

In an embodiment, wherein the oscillating residue deflector is driven by a hydraulic motor, the hydraulic valve setup and controller can be configured so that the motor gets more flow (spins faster) as the ground speed of the combine is increased. In another embodiment, wherein the oscillating residue deflector is driven by an electric motor, the RPM of the electric motor can be increased/decreased as the ground speed of the combine is changed. In another embodiment, the spreader impeller rotating speed is varied based on a detected residue distribution (i.e., feedback from the residue radar sensors ) for a more even spread distribution.

In another embodiment, the operator may observe (e.g. through a mirror or through a video feed from a camera located at the rear of the combine) the residue spread on the ground. If the residue spread is deemed by the operator to be undesirable, the operator may enter adjustments to the deflector oscillation frequency, increasing or decreasing until the observable residue spread is desirable (e.g. uniformly spread on the ground). Once these adjustments are made, the controller may use these adjusted values for controlling the deflector oscillating frequency for further harvesting and residue spreading.

It is to be understood that the above-described operating steps are performed by the controller 600 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the controller 600 described herein, such as the aforementioned method of operation, is implemented in software code or instructions which are tangibly stored on the tangible computer readable medium. Upon loading and executing such software code or instructions by the controller 600, the controller 600 may perform any of the functionality of the controller 600 described herein, including any steps of the aforementioned method described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

## Claims

1. A combine harvester (20) comprising:
a feeder housing for receiving harvested crop;
a threshing and separating system for the harvested crop to produce grain and residue;
a residue spreader (36) comprising one or more impellers (44) for expelling the residue from the combine harvester (20);
a residue deflector (62) configured to oscillate by rotation about an axis oriented in the fore-aft direction of the harvester, and positioned to deflect residue expelled by the impellers (44);
**characterized in that** the combine harvester (20) further comprises a controller (600) configured to:
1) determine a ground speed (708a) of the combine harvester (20);
2) adjust an oscillating frequency of the residue deflector (62) to achieve a desired residue distribution, based on the ground speed (708a) of the combine harvester (20).

2. The combine harvester (20) of claim 1, further comprising one or more sensors (606) to detect residue expelled by the combine harvester (20), wherein the controller (600) is further configured to receive a signal from the one or more sensors (606) indicating a detected residue distribution, to determine whether the detected residue distribution has an undesired feature, and, upon determining the detected residue distribution has an undesired feature, to adjust the oscillating frequency of the residue deflector (62) to mitigate the undesired feature of the detected residue distribution.

3. The combine harvester of claim 1 or 2, wherein the oscillating frequency of the residue deflector (62) may be varied by an operator of the combine harvester (20).

4. The combine harvester of any of claims 1 to 3, wherein a hydraulic or electric motor drives the oscillating residue deflector (62).

5. The combine harvester (20) of claim 2, wherein the undesired feature of the detected residue distribution comprises striping of the residue as it is deposited on the ground.

6. The combine harvester (20) of any of claims 1 to 5, wherein the oscillating frequency of the residue deflector (62) is increased in response to an increase in the ground speed (708a) of the combine harvester (20).

7. The combine harvester (20) of any of claims 2 to 6, wherein the oscillating frequency of the residue deflector (62) is increased in response to the controller (600) determining the detected residue distribution comprises striping of the residue as it is deposited on the ground.

8. A method for controlling a combine harvester according to claim 1, **characterized in that** the method comprises:
1) determining, by the controller (600), a ground speed (708a) of the combine harvester;
2) adjusting, by the controller (600), an oscillating frequency of the residue deflector (62) to achieve a desired residue distribution, based on the ground speed (708a) of the combine harvester (20).

9. The method of claim 8, wherein the combine harvester (20) further comprises one or more sensors (606) to detect residue expelled by the combine harvester (20), and wherein the method further comprises the controller (600) receiving a signal from the one or more sensors (606) indicating a detected residue distribution, determining whether the detected residue distribution has an undesired feature, and, upon determining the detected residue distribution has an undesired feature, adjusting the oscillating frequency of the residue deflector (62) to mitigate the undesired feature of the detected residue distribution.

10. The method of claim 8 or 9, further comprising varying, by an operator of the combine harvester (20), the oscillating frequency of the residue deflector (62).

11. The method of claim 9, wherein the undesired feature of the detected residue distribution comprises striping of the residue as it is deposited on the ground.

12. The method of any of claims 9 to 11, comprising increasing the oscillating frequency of the residue deflector (62) in response to an increase in the ground speed (708a) of the combine harvester.

13. The method of claim 11, comprising increasing the oscillating frequency of the residue deflector (62) in response to the controller (600) determining the detected residue distribution comprises striping of the residue as it is deposited on the ground.

## Patentansprüche

1. Mähdrescher (20), umfassend:
ein Zuführungsgehäuse zur Aufnahme von geerntetem Erntegut;
ein Dresch- und Trennsystem für das geerntete Erntegut zum Erzeugen von Getreide und Rückständen;
einen Rückstandsverteiler (36), der einen oder mehrere Flügelrädern (44) zum Ausstoßen der Rückstände aus dem Mähdrescher (20) umfasst;
einen Rückstandsablenker (62), der konfiguriert ist, um durch Rotation um eine Achse zu schwingen, die in der Längsrichtung des Mähdreschers ausgerichtet ist, und der positioniert ist, um von den Flügelrädern (44) ausgestoßene Rückstände abzulenken;
**dadurch gekennzeichnet, dass** der Mähdrescher (20) ferner eine Steuerung (600) umfasst, die konfiguriert ist zum:
1) Bestimmen einer Fahrgeschwindigkeit (708a) des Mähdreschers (20);
2) Einstellen einer Schwingfrequenz des Rückstandsablenkers (62), um eine gewünschte Rückstandsverteilung zu erreichen, basierend auf der Fahrgeschwindigkeit (708a) des Mähdreschers (20).

2. Mähdrescher (20) nach Anspruch 1, ferner umfassend einen oder mehrere Sensoren (606) zum Erfassen von durch den Mähdrescher (20) ausgestoßenen Rückständen, wobei die Steuerung (600) ferner konfiguriert ist, um ein Signal von dem einen oder den mehreren Sensoren (606) zu empfangen, das eine erfasste Rückstandsverteilung anzeigt, um zu bestimmen, ob die erfasste Rückstandsverteilung ein unerwünschtes Merkmal aufweist, und um bei Bestimmung, dass die erfasste Rückstandsverteilung ein unerwünschtes Merkmal aufweist, die Schwingfrequenz des Rückstandsablenkers (62) einzustellen, um das unerwünschte Merkmal der erfassten Rückstandsverteilung zu mildern.

3. Mähdrescher nach Anspruch 1 oder 2, wobei die Schwingfrequenz des Rückstandsablenkers (62) von einem Bediener des Mähdreschers (20) variiert werden kann.

4. Mähdrescher nach einem der Ansprüche 1 bis 3, wobei ein hydraulischer oder elektrischer Motor den schwingenden Rückstandsablenker (62) antreibt.

5. Mähdrescher (20) nach Anspruch 2, wobei das unerwünschte Merkmal der erfassten Rückstandsverteilung eine Streifenbildung des Rückstands umfasst, wenn er auf dem Boden abgeladen wird.

6. Mähdrescher (20) nach einem der Ansprüche 1 bis 5, wobei die Schwingfrequenz des Rückstandsablenkers (62) als Reaktion auf eine Erhöhung der Fahrgeschwindigkeit (708a) des Mähdreschers (20) erhöht wird.

7. Mähdrescher (20) nach einem der Ansprüche 2 bis 6, wobei die Schwingfrequenz des Rückstandsablenkers (62) als Reaktion darauf erhöht wird, dass die Steuerung (600) bestimmt, dass die erfasste Rückstandsverteilung eine Streifenbildung des Rückstands umfasst, wenn dieser auf dem Boden abgeladen wird.

8. Verfahren zum Steuern eines Mähdreschers nach Anspruch 1, **dadurch gekennzeichnet, dass** das Verfahren umfasst:
1) Bestimmen, durch die Steuerung (600), einer Fahrgeschwindigkeit (708a) des Mähdreschers;
2) Einstellen, durch die Steuerung (600), einer Schwingfrequenz des Rückstandsablenkers (62), um eine gewünschte Rückstandsverteilung zu erreichen, basierend auf der Fahrgeschwindigkeit (708a) des Mähdreschers (20).

9. Verfahren nach Anspruch 8, wobei der Mähdrescher (20) ferner einen oder mehrere Sensoren (606) umfasst, um von dem Mähdrescher (20) ausgestoßene Rückstände zu erfassen, und wobei das Verfahren ferner umfasst, dass die Steuerung (600) ein Signal von dem einen oder den mehreren Sensoren (606) empfängt, das eine erfasste Rückstandsverteilung anzeigt, bestimmt, ob die erfasste Rückstandsverteilung ein unerwünschtes Merkmal aufweist, und bei Bestimmung, dass die erfasste Rückstandsverteilung ein unerwünschtes Merkmal aufweist, die Schwingfrequenz des Rückstandsablenkers (62) einstellt, um das unerwünschte Merkmal der erfassten Rückstandsverteilung zu mildern.

10. Verfahren nach Anspruch 8 oder 9, ferner umfassend das Variieren der Schwingfrequenz des Rückstandsablenkers (62) durch einen Bediener des Mähdreschers (20).

11. Verfahren nach Anspruch 9, wobei das unerwünschte Merkmal der erfassten Rückstandsverteilung eine Streifenbildung des Rückstands umfasst, während er auf dem Boden abgeladen wird.

12. Verfahren nach einem der Ansprüche 9 bis 11, umfassend das Erhöhen der Schwingfrequenz des Rückstandsablenkers (62) als Reaktion auf eine Erhöhung der Fahrgeschwindigkeit (708a) des Mähdreschers.

13. Verfahren nach Anspruch 11, umfassend das Erhöhen der Schwingfrequenz des Rückstandsablenkers (62) als Reaktion darauf, dass die Steuerung (600) bestimmt, dass die erfasste Rückstandsverteilung eine Streifenbildung des Rückstands umfasst, während er auf dem Boden abgeladen wird.

## Revendications

1. Moissonneuse-batteuse (20) comprenant :
un logement d'alimentation destiné à recevoir la récolte ;
un système de battage et de séparation pour la récolte afin de produire des grains et des résidus ;
un épandeur de résidus (36) comprenant une ou plusieurs turbines (44) destinées à expulser les résidus de la moissonneuse-batteuse (20) ;
un déflecteur de résidus (62) configuré pour osciller par rotation autour d'un axe orienté dans la direction avant-arrière de la moissonneuse-batteuse, et positionné pour défléchir les résidus expulsés par les turbines (44) ;
**caractérisée en ce que** la moissonneuse-batteuse (20) comprend en outre un dispositif de commande (600) configuré pour :
1) déterminer une vitesse au sol (708a) de la moissonneuse-batteuse (20) ;
2) régler une fréquence d'oscillation du déflecteur de résidus (62) pour obtenir une distribution souhaitée de résidus, en fonction de la vitesse au sol (708a) de la moissonneuse-batteuse (20).

2. Moissonneuse-batteuse (20) selon la revendication 1, comprenant en outre un ou plusieurs capteurs (606) pour détecter un résidu expulsé par la moissonneuse-batteuse (20), dans laquelle le dispositif de commande (600) est en outre configuré pour recevoir un signal provenant du ou des capteurs (606) et indiquant une distribution de résidus détectée, afin de déterminer si la distribution de résidus détectée présente une caractéristique indésirable, et, après avoir déterminé que la distribution de résidus détectée présente une caractéristique indésirable, pour régler la fréquence d'oscillation du déflecteur de résidus (62) afin d'atténuer la caractéristique indésirable de la distribution de résidus détectée.

3. Moissonneuse-batteuse selon la revendication 1 ou 2, dans laquelle la fréquence d'oscillation du déflecteur de résidus (62) peut être modifiée par un opérateur de la moissonneuse-batteuse (20).

4. Moissonneuse-batteuse selon l'une quelconque des revendications 1 à 3, dans laquelle un moteur hydraulique ou moteur électrique entraîne le déflecteur de résidus (62) oscillant.

5. Moissonneuse-batteuse (20) selon la revendication 2, dans laquelle la caractéristique indésirable de la distribution de résidus détectée comprend le marquage des résidus à mesure qu'ils sont déposés sur le sol.

6. Moissonneuse-batteuse (20) selon l'une quelconque des revendications 1 à 5, dans laquelle la fréquence d'oscillation du déflecteur de résidus (62) est augmentée en réponse à une augmentation de la vitesse au sol (708a) de la moissonneuse-batteuse (20).

7. Moissonneuse-batteuse (20) selon l'une quelconque des revendications 2 à 6, dans laquelle la fréquence d'oscillation du déflecteur de résidus (62) est augmentée en réponse au fait que le dispositif de commande (600) détermine que la distribution de résidus détectée comprend le marquage des résidus à mesure qu'ils sont déposés sur le sol.

8. Procédé permettant de commander une moissonneuse-batteuse selon la revendication 1, **caractérisé en ce que** le procédé comprend :
1) la détermination, par le dispositif de commande (600), d'une vitesse au sol (708a) de la moissonneuse-batteuse ;
2) le réglage, par le dispositif de commande (600), d'une fréquence d'oscillation du déflecteur de résidus (62) pour obtenir une distribution souhaitée de résidus, en fonction de la vitesse au sol (708a) de la moissonneuse-batteuse (20).

9. Procédé selon la revendication 8, dans lequel la moissonneuse-batteuse (20) comprend en outre un ou plusieurs capteurs (606) pour détecter un résidu expulsé par la moissonneuse-batteuse (20), et dans lequel le procédé comprend en outre la réception, par le dispositif de commande (600), d'un signal provenant du ou des capteurs (606) et indiquant une distribution de résidus détectée, la détermination du fait de savoir si la distribution de résidus détectée présente une caractéristique indésirable, et, après avoir déterminé que la distribution de résidus détectée présente une caractéristique indésirable, le réglage de la fréquence d'oscillation du déflecteur de résidus (62) pour atténuer la caractéristique indésirable de la distribution de résidus détectée.

10. Procédé selon la revendication 8 ou 9, comprenant en outre la modification, par un opérateur de la moissonneuse-batteuse (20), de la fréquence d'oscillation du déflecteur de résidus (62).

11. Procédé selon la revendication 9, dans lequel la caractéristique indésirable de la distribution de résidus détectée comprend le marquage du résidu à mesure qu'il se dépose sur le sol.

12. Procédé selon l'une quelconque des revendications 9 à 11, comprenant l'augmentation de la fréquence d'oscillation du déflecteur de résidus (62) en réponse à une augmentation de la vitesse au sol (708a) de la moissonneuse-batteuse.

13. Procédé selon la revendication 11, comprenant l'augmentation de la fréquence d'oscillation du déflecteur de résidus (62) en réponse au fait que le dispositif de commande (600) détermine que la distribution de résidus détectée comprend le marquage du résidu à mesure qu'il se dépose sur le sol.
